# EUROPEAN PATENT SPECIFICATION

(11) **EP 2 148 013 B1**
(45) Date of publication and mention of the grant of the patent: **26.10.2011**
(21) Application number: 07832494.4
(22) Date of filing: 26.11.2007
(51) Int. Cl.: E02F 9/16, B62D 25/04, E02F 9/00, E02F 9/08

(54) **REVOLVING WORK VEHICLE**
ROTIERENDES ARBEITSFAHRZEUG
VÉHICULE DE CHANTIER TOURNANT

(30) Priority: 19.04.2007 JP 2007110927
(43) Date of publication of application: 27.01.2010
(73) Proprietor: Yanmar Co., Ltd., Osaka-shi, Osaka 530-0013 (JP)
(72) Inventor: NISHIHARA, Keiichi c/o YANMAR CONSTRUCTION EQUIPMENT CO., LTD., Chikugo-shi Fukuoka 833-0055 (JP); KONDOU, Saizou c/o YANMAR CONSTRUCTION EQUIPMENT CO., LTD., Chikugo-shi Fukuoka 833-0055 (JP); IKEDA, Takahiro c/o YANMAR CONSTRUCTION EQUIPMENT CO., LTD., Chikugo-shi Fukuoka 833-0055 (JP); NOBAYASHI, Takafumi c/o YANMAR CONSTRUCTION EQUIPMENT CO., LTD., Chikugo-shi Fukuoka 833-0055 (JP); NAGATA, Masao c/o YANMAR CONSTRUCTION EQUIPMENT CO., LTD., Chikugo-shi Fukuoka 833-0055 (JP)
(74) Representative: Jostarndt, Hans-Dieter
(86) International application number: PCT/JP2007/072769
(87) International publication number: WO 2008/136149

(56) References cited:
- EP-A- 1 582 635
- EP-A- 1 589 153
- JP-A- 2003 074 085
- JP-A- 2004 130 830
- JP-A- 2005 282 111

## Description

### Technical Field

The present invention relates to a revolving work vehicle such as a power shove or a backhoe having a canopy.

### Background Art

In Patent Literature, according to the preamble of independent claim 1, there is well known a revolving work vehicle having a canopy. With regard to such a revolving work vehicle, a working machine is attached to a front portion of a revolving base, an operator seat is supported at the longitudinal center of the revolving base, and a weight and a bonnet are provided in the rear portion of the revolving base. On the revolving base, the weight is extended upward and a support member supporting the canopy is attached to the upper end of the weight so as to support the canopy. For example, the Patent Literature 1 discloses such a revolving work vehicle.
Patent Literature 2 discloses a swiveling work machine including a swivel deck, an engine and an operator's seat which are mounted on the swivel deck and a protector for the operator's seat mounted erect on the swivel deck. The swivel deck mounts, at a rear portion thereof, a support frame having four post portions disposed around the engine. Two rear post portions of the support frame have upper ends thereof connected via a rear beam member. The rear beam member includes an attaching portion for the operator's seat protector to which portion the protector is attached.
Patent Literature 3 discloses a swiveling utility machine including a swivel deck, an engine disposed at a rear portion of the swivel deck, a radiator disposed adjacent the engine, a driver's seat, a right implement controller disposed on the right side of the driver's seat and a left implement controller disposed on the left side of the driver's seat. A support frame is disposed at a rear portion of the swivel deck in such a manner as to create a rectangular space inside the swivel deck, the engine being mounted within the rectangular space. The driver' seat is disposed upwardly of the support frame. The right implement controller is secured to a right side of the support frame, and the left implement controller is attached to a left side of the support frame to be switchable in its posture between an operational posture and a retracted posture. An access step is disposed at a front portion of the support frame, and an access entrance is provided on a left side of the access step.
Patent Literature 4 discloses a revolving work machine, whereby an engine and a muffler are arranged in a rear part of a revolving stand arranged on a traveling device so as to be freely revolvable around a vertical shaft, these members are covered with a hood, and the operation seat is arranged in front of the hood corresponding to the muffler. The muffler is slantingly arranged forward and downward so that a front part of the muffler is positioned under the operation seat.
Patent Literature 5 discloses a cab of a working machine, wherein a support frame of a rectangular shape in a plan view having a column and is arranged in a rear part of a revolving base by straddling an engine. A driver's seat is mounted on an upper part of this support frame. A right work operation device is fixed to a right side part of the support frame. A left work operation device is arranged in a left side part so that an attitude can be freely changed to an operation attitude and a retreat attitude. A radiator is arranged on the left side of the engine. A side cover for covering the radiator is arranged in a left side part of the support frame. A front face of the side cover and a front face of the left work operation device of the retreat attitude, are arranged so as to become substantially flush with a fixing cover arranged in front of the support frame. A step is formed on the front side of the fixing cover and the side cover.
Patent Literature 1: the Japanese Patent Laid Open Gazette Hei. 10-140607
Patent Literature 2: European Patent Application EP 1 582 635 A2
Patent Literature 3: European Patent Application EP 1 589 153 A2
Patent Literature 4: Patent Abstracts of Japan, Publication Number 2003074085
Patent Literature 5: Patent Abstracts of Japan, Publication Number 2005282111

With regard to the above-mentioned revolving work vehicle, the support member is attached to the weight so as to secure support intensity of the canopy. However, since the weight is extended upward, the center of gravity of the weight is high, and the center of gravity of the whole vehicle body is higher than that of the conventional vehicle. Therefore, in the case that the work vehicle moves to the position lower than the ground surface and performs excavation work or the like, the vehicle body is not stable.

### Disclosure of Invention

The purpose of the present invention is to provide a revolving work vehicle that a canopy is supported with sufficient intensity without deteriorating the stability of a vehicle body.

For the purpose, according to the present invention, with regard to a revolving work vehicle wherein a revolving body has a revolving base, an operator seat support base and a bonnet, the bonnet is arranged around the operator seat support base and covers the revolving base, and a canopy is arranged above an operator seat supported on the operator seat support base, a fixation part extended horizontally is provided in a rear portion of the revolving base; a recess dented inward from an outer perimeter of the revolving base is formed in the bonnet; the recess is extended upward from the fixation part; and a lower portion of a pillar supporting the canopy is arranged in the recess and is fixed to the fixation part.

Accordingly, with regard to the above-mentioned revolving work vehicle, the pillar is fixed stably to the vehicle body so as to support the canopy with sufficient intensity without deteriorating the stability of the vehicle body. The attachment position of the canopy can be lowered so as to improve detachment and attachment ability at the detachment or attachment work. The operator seat support base can be simplified so as to reduce the weight and cost thereof. Furthermore, as mentioned above, the lower portion of the pillar of the canopy is attached to the fixation part arranged in the recess of the bonnet, whereby the pillar of the canopy can be arranged inside the revolving radius of the vehicle body without interfering the bonnet and can be attached while saving the space.

As an example of the construction of the recess, the bonnet comprises a side cover and a rear cover, and the recess is extended parallel to a confronting part between the side cover and the rear cover.

Each of the fixation part of the revolving base, the recess of the bonnet and the pillar of the canopy is provided as a left and right pair, and the bonnet is provided between the left and right pillars so as to be openable. In this case, the bonnet comprises a pair of left and right side covers and a rear cover, and each of the recesses is extended parallel to a confronting part between corresponding one of the side covers and the rear cover.

Accordingly, the bonnet can be opened so as to maintain the members arranged in the bonnet such as the engine easily.

With regard to the revolving work vehicle, a reinforcement member is provided at an upper end of the operator seat support base and the reinforcement member reinforces the pillar of the canopy. In more detail, the reinforcement member is extended laterally and has a recess curved alone an outer perimeter of the pillar at one of left and right ends of the reinforcement member, the recess is engaged with the vertical middle portion of the pillar, and the other of the left and right ends is fixed to an upper surface of a rear portion of the operator seat support base.

With regard to the construction that each of the fixation part of the revolving base, the recess of the bonnet and the pillar of the canopy is provided as a left and right pair, and the bonnet is provided between the left and right pillars so as to be openable, a pair of left and right reinforcement members are provided at an upper end of the operator seat support base, and the left and right reinforcement members reinforce the left and right pillars, In more detail, each of the reinforcement members is extended laterally and has a recess curved along an outer perimeter of the pillar at one of left and wight ends of the reinforcement member, the recess is engaged with the vertical middle portion of corresponding one of the pillars, and the other of the left and right ends is fixed to an upper surface of a rear portion of the operator seat support base.

Accordingly, the pillar of the canopy can be fixed at plural points so as to improve the support intensity of the canopy further.

### Brief Description of Drawings

[Fig. 1] It is an entire side view of a revolving work vehicle according to an embodiment of the present invention.
[Fig. 2] It is a side view of a revolving body.
[Fig. 3] It is a rear view of the revolving body.
[Fig. 4] It is a plan view of a fixed part of pillars of a canopy.
[Fig. 5] It is a perspective rear view of the fixed part of the pillars of the canopy. Description of Notations

- 1: a revolving work vehicle
- 7: a revolving base
- 8: an engine
- 11: a bonnet
- 11a: recesses
- 12: an operator seat support base
- 13: an operator seat
- 18: a canopy
- 41: pillars
- 47: a reinforcement member

### The Best Mode for Carrying out the Invention

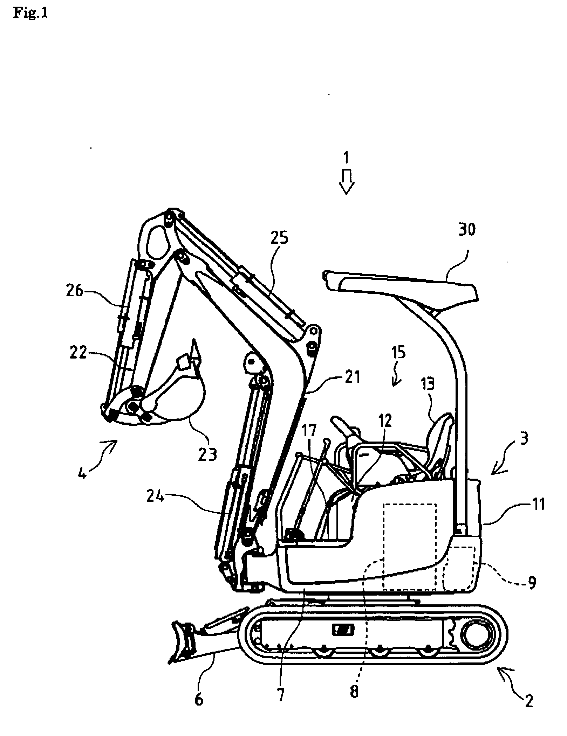

Explanation will be given on schematic construction of a short-tail revolving radius work vehicle 1 according to an embodiment of the present invention. As shown in Fig. 1, the revolving work vehicle 1 comprises a crawler travel unit 2, a revolving body 3 supported on the center of the upper portion of the crawler travel unit 2 so as to be revolvable laterally, and a working machine 4 attached to the lateral center of the front portion of the revolving body 3. A blade 6 is disposed swingably upward and downward at font or rear side of the crawler travel unit 2 so that leveling work following excavating work is performed by the blade 6.

In the revolving body 3, an engine 8, a weight 9 and the like are provided on a rear portion of a revolving base 7, and the sides and rear of the engine are covered by a bonnet 11. An operator scat support base 12 is disposed above the engine 8. An operator seat 13 is provided on the operator seat support base 12, and an operation part 15 is constructed around the seat.

The operator seat 13 is arranged at the lateral center of the rear portion of the operation part 15, and an operation lever, a lock lever and the like are arranged at the left and right sides of the seat. A step 17 is disposed in the front portion of the operation part, below and before the operator seat 13 so as to be extended laterally. A pedal, an operation lever and the like are arranged on the step 17. A canopy 18 is arranged above the operator seat 13 and the canopy 18 covers the upper side of the operator seat 13 and the members around the seat.

The working machine 4 comprises a boom 21, an arm 22 and a bucket 23. The boom 21, each of the arm 22 and the bucket 23 are connected to one of end of corresponding one of cylinder 24, 25 and 26 so as to be rotated by telescopic motion of the cylinder. Each of these members is rotated by operation of the operation lever of the operation part 15 so that the working machine 4 performs excavating work, loading work or the like.

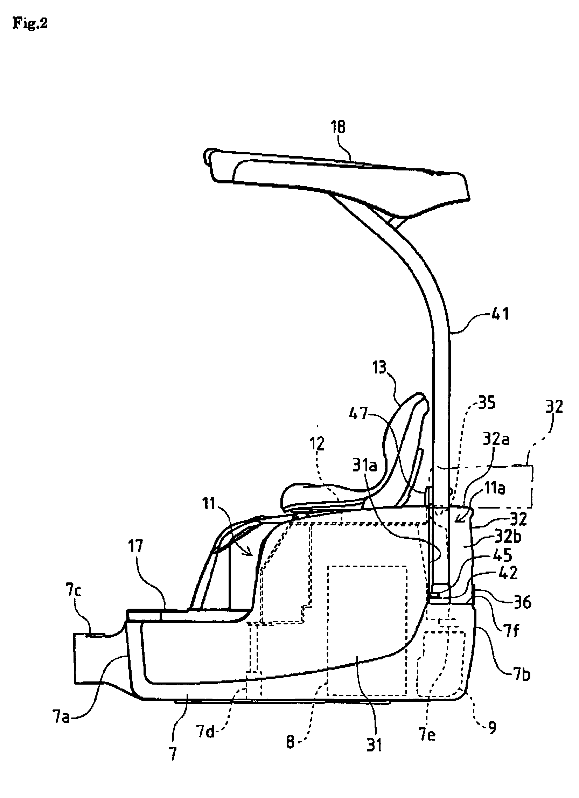

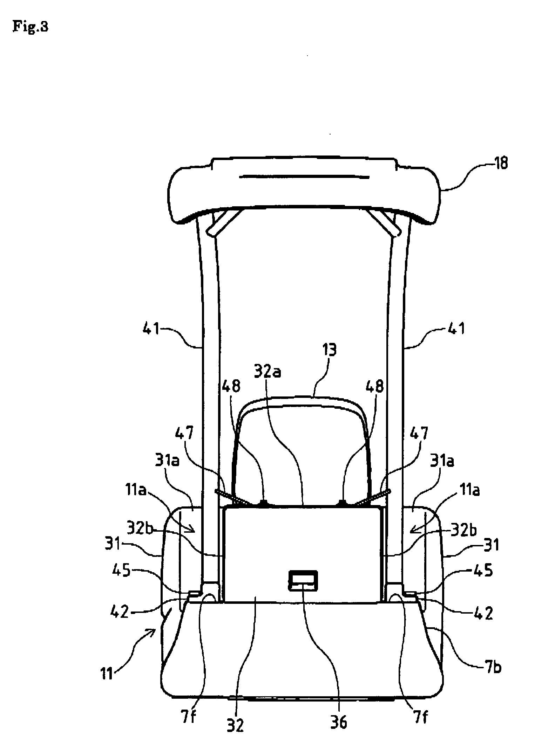

Next, explanation will be given on the construction of the revolving body 3. As shown in Figs. 2 and 3, the revolving body 3 comprises the revolving base 7, the operator seat support base 12, the bonnet 11 and the step 17. The revolving base 7 and the operator seat support base 12 serve as a frame of the revolving body. The revolving base 7 is a so-called body frame expanded over the lower portion of the revolving body 3 and integrally has a plurality of support parts. The revolving base 7 has upstand parts 7a and 7b standing upward at the front and rear ends of the revolving base 7 over the lateral width thereof so as to be U-like shaped and opened upward when viewed in side sectionally. The revolving base 7 is revolvably supported at the lateral and longitudinal center of the crawler travel unit 2. The working machine 4 is attached to an attachment part 7c provided at the front end of the front upstand part 7a.

Support parts 7d projected upward are formed respectively at the left and right sides of the longitudinal center of the revolving base 7, and support parts 7e projected inward are formed respectively at the left and right sides of the rear upstand part 7b, and the pairs of left and right support parts 7d and 7e arranged at the front and rear support the operator seat support base 12. The weight 9 is disposed behind and below the operator seat support base 12 and before the rear upstand part 7b so as to make the position of the center of gravity low. The step 17 is supported by lower front portion of the operator seat support base 12 and the front upstand part 7a of the revolving base 7.

The weight 9 is independent of the revolving base 7 and detachably attached thereto. A weight 9 of different weight can be attached to a revolving work vehicle of different specification.

Accordingly the rear portion of the revolving body 3 is covered by the operator seat support base 12, and the upper side of the front portion of the revolving body 3 is covered by the step 17. The bonnet 11 is arranged around a part of the revolving base 7 and the operator seat support base 12, and the bonnet 11 covers the rear portion and left and right side portions of the revolving body 3.

The bonnet 11 comprises a pair of left and right side covers 31 and a rear cover 32 and is U-like shaped when viewed in plan. The bonnet 1 1 is arranged at the rear, left and right sides of the revolving body 3 so as to cover the engine 8, a hydraulic pump, a pressure oil tank and the like arranged between the revolving base 7 and the operator seat support base 12, and to cover hydraulic apparatuses including a control valve and a relief valve switching actuation state of the working machine 4 arranged between the revolving base 7 and the step 17.

Each of the left and right side covers 31 is extended longitudinally between the front and rear upstand parts 7a and 7b of the revolving base 7. The front portion of the side cover 31 is arranged at the side of the step 17 and the rear portion thereof is arranged at the side of the operator seat support base 12, and the side cover 31 is formed to bulge upward along the shapes of the step 17 and the operator seat support base 12. The rear end of each of the side covers 31 is bent toward the lateral center of the revolving base 7 and forms a bent part 31 a which is a vertical surface extended laterally so as to cover the corresponding one of the left and right corners formed in the rear end portion of the operator scat support base 12, whereby each of the side covers 31 is substantially L-like shaped when viewed in plan.

The rear cover 32 is extended laterally between the left and right side covers 31 and arranged before the operator seat support base 12, on the rear upstand part 7b of the revolving base 7. The upper end of the rear cover 32 is substantially at the same height as the operator seat support base 12. The upper end of the rear cover 32 is bent forward so as to provide substantially horizontal upper bent part 32a, whereby the rear cover 32 is substantially inversed L-like shaped when viewed in side. The left and right ends of the rear cover 32 are bent forward so as to provide a pair of left and right bent parts 32b which are substantially vertical about the longitudinal direction, whereby the rear cover 32 is substantially U-like shaped and opened forward when viewed in plan sectionally

A part of the upper bent part 32a of the rear cover 32 touches downward the rear side of upper end of the operator seat support base 12 so as to overlap it. A part of each of the left and right bent parts 32b of the rear cover 32 touches bent parts 31 a at the rear end of corresponding one of the left and right side covers 31 forward so as to overlap it, whereby the left and right side covers 31 are connected to the rear cover 32 closely.

Accordingly, the portion in the vicinity of each of confronting parts or overlapping parts between the rear portion of the side covers 31 and the both sides of the rear cover 32 is dented inward from the outer perimeter of the rear upstand part 7b of the revolving base 7, that is, the outer perimeter of the revolving base 7 so as to form recesses 11a along the vertical direction at the left and right sides of the rear portion of the bonnet 11.

A fixation part 7f projected toward the inside of the vehicle body is formed at each of the left and right sides of the upper end of the rear upstand part 7b substantially at the same height as the step 17 so as to fill up the gap between the rear upstand part 7b and the side covers 31 and the rear cover 32 generated by the recesses 11a. Each of the fixation parts 7f is extended horizontally, and bolt holes are formed vertically in the left and right sides of the fixation part 7f.

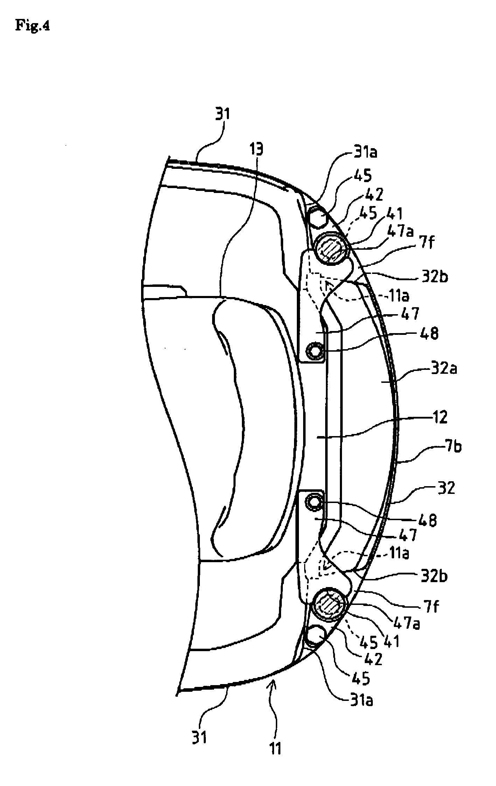

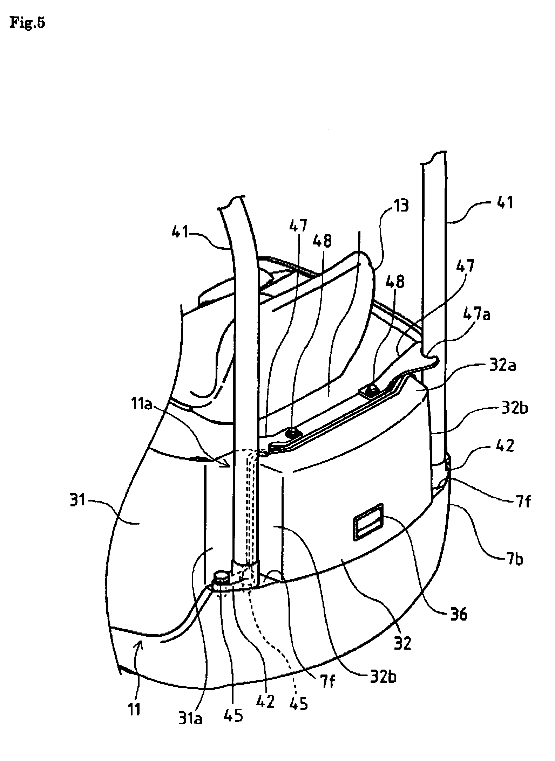

As shown in Figs. 4 and 5, a pair of left and right pillars 41 supporting the canopy 18 are arranged in the recesses 11 a at the left and right sides of the rear portion of the bonnet 11 so as to pinch the rear cover 32 laterally The pillars 41 arc extended upward from the fixation parts 7f of the revolving base 7 substantially parallel to the confronting parts between the side covers 31 and the rear cover 32 (the recesses 11 a). The canopy 18 is fixed to the upper ends of the pillars 41, and the canopy 18 covers the upper side of the operator seat 13 and the members around the seat.

A fixation piece 42 is provided at the lower end of each of the left and right pillars 41, and bolt holes are formed vertically in the left and right sides of the fixation piece 42. Each of the fixation pieces 42 is arranged on the corresponding one of the fixation parts 7f of the revolving base 7 so that the bolt holes of the fixation piece 42 are in agreement with those of the fixation part 7f. Fastening members 45 such as bolts are screwed into the bolt holes so that the fixation pieces 42 are fixed to the fixation parts 7f. Accordingly, the lower ends of the pillars 41 are attached to the revolving base 7 and fixed stably.

In this case, each of the pillars 41 is as close to the corresponding one of the confronting parts between the side covers 31 and the rear cover 32 as possible so as to covet the side of the confronting part and protect it. At the time of assembly of the canopy 18, conventionally, the canopy 18 must be lifted to the upper portion of the bonnet 11. However, according to the construction of this embodiment, the canopy 18 must be lifted to only the low position at the upper portion of the revolving base 7. The fixation work can be performed at the low position, whereby assembly ability is improved.

A reinforcement member 47 is provided in the vertical middle portion of each of the left and right pillars 41. The reinforcement member 47 is extended laterally and arranged on the upper surface of the rear portion of the operator seat support base 12. A recess 41 a is provided at one of the lateral ends of the reinforcement member 47 and curved along the outer peripheral surface of the pillar 41. The recess 41 a is engaged with the vertical middle portion of the pillar 41, and the other end of the reinforcement member 47 is fastened to the operator seat support base 12 by a fastening member 48 such as a bolt. Accordingly, the left and right pillars 41 are reinforced by the reinforcement members 47 so as not to slant longitudinally or laterally.

The rear cover 32 is arranged between the left and right pillars 41. As shown in Fig. 2, a rotation fulcrum 35 is provided at the upper bent part 32a of the rear cover 32 and behind the upper end of the operator scat support base 12. The rear cover 32 is supported so as to be rotatable vertically centering on the rotation fulcrum 35. Accordingly, the rear cover 32 is opened and the rear portion of the vehicle is opened outward by holding a handle 36 disposed on the rear surface of the rotating the rear cover 32 and rotating the rotating the rear cover 32 upward, and the rear cover 32 is closed by rotating the rotating the rear cover 32 downward.

In this embodiment, the pair of left and right pillars 41 supports the canopy 18. However, the construction is not limited thereto. For example, pillars may be connected to each other at their upper portion, or a pillar is added in the front portion so as to support the canopy 18 by three pillars.

With regard to the revolving work vehicle 1 that the operator seat support base 12 is provided on the revolving base 7 and the weight 9 is arranged in the rear portion of the revolving base 7, the canopy 18 is arranged above the operator seat 13 supported on the operator seat support base 12, and the lower portion of the pillar 41 supporting the canopy 18 is attached and fixed to the rear portion of the revolving base 7. Accordingly, the pillar 41 is fixed stably to the vehicle body so as to support the canopy 18 with sufficient intensity without deteriorating the stability of the vehicle body. The attachment position of the canopy 18 can be lowered so as to improve detachment and attachment ability at the detachment or attachment work. The operator seat support base 12 can be simplified so as to reduce the weight and cost thereof.

With regard to the revolving work vehicle 1, the reinforcement member 47 is provided at the upper end of the operator seat support base 12 and the reinforcement member 47 reinforces the pillar 41 of the canopy 18. Accordingly, the pillar 41 of the canopy 18 can be fixed at plural points so as to improve the support intensity of the canopy 18 further.

With regard to the revolving work vehicle 1, the engine 8 and the bonnet 11 covering the engine 8 are provided in the rear portion of the revolving base 7, the recess 11 a dented inward is formed in the rear portion of the bonnet 11, and the pillar 41 of the canopy 18 is arranged in the recess 11 a. Accordingly, the pillar 41 of the canopy 18 can be arranged inside the revolving radius of the vehicle body without interfering the bonnet 11 and can be attached while saving the space.

With regard to the revolving work vehicle 1, the pair of left and right pillars 41 of the canopy 18 is provided, and the bonnet 11 (the rear cover 32) is provided between the left and right pillars 41 so as to be openable. Accordingly, the bonnet 11 can be opened so as to maintain the members arranged in the bonnet 11 such as the engine easily.

## Claims

1. A revolving work vehicle (1), wherein a revolving body (3) has a revolving base (7), an operator seat support base (12) provided on the revolving base(7) and a bonnet (11), the bonnet (11) is arranged around the operator seat support base (12) and covers the revolving base (7), and a canopy (18) is arranged above an operator seat (13) supported on the operator seat support base (12), wherein
the canopy (18) is supported on a pair of left and right pillars (41) that is extended upward in substantially parallel;
the revolving base (7) has an upstand part (7a) standing upward at a rear end of the revolving base (7);
a fixation part (7f) extended horizontally is formed at an upper end of the rear upstand part (7a) at the same height as a step (17) disposed before the operator's seat (13),
**characterized in that**:
the bonnet (11) has a rear cover (32) so as to be openable, arranged behind the operator seat support base (12) and on the fixation part (7f) of the upstand part (7a);
a pair of left and right recesses (11a) dented inward from an outer perimeter of the revolving base (12) and extended upward from the fixation part (7f), is formed in the bonnet (11) so that the left and right ends of the rear cover (32) are bent forward; and
the pair of left and right pillars (41) is arranged in the pair of left and right recesses (1 1a) so as to pinch the rear cover (32) from left and right both sides, and
lower portions of the pair of left and right pillars (41) are fixed to the fixation part.

2. The revolving work vehicle (1) as set forth in claim 1, wherein a reinforcement member (47) is provided at an upper end of the operator seat support base (12) and the reinforcement member (47) reinforces the pair of left and right pillars (41)of the canopy (18).

3. The revolving work vehicle (1) as set forth in claim 1, wherein the reinforcement member (47) is extended laterally and has a recess (41a) curved along an outer perimeter of the pair of left and right pillars (41) at one of left and right ends of the reinforcement member (47), the recess (41a) is engaged with the vertical middle portion of the pair of left and right pillars (41), and the other of the left and right ends is fixed to an upper surface of a rear portion of the operator seat support base (12).

4. The revolving work vehicle (1) as set forth in one of claims 1 to 3, wherein the bonnet (11) has a pair of left and right side covers (31); and
the bonnet (11) comprises the pair of left and right side covers (31) and a rear cover (32), and the the pair of left and right recesses (11a) is extended parallel to confronting parts between the pair of left and right side covers (31) and the rear cover (32), and the pair of left and right pillars (41) is close to the corresponding one of the confronting part between the pair of left and right side covers (31) and the rear cover (32) as to cover the confronting parts and protect the confronting parts.

## Patentansprüche

1. Rotierendes Arbeitsfahrzeug (1), in dem ein rotierender Aufbau (3) einen rotierenden Unterbau (7), einen Bedienersitz-Stützsockel (12), der an dem rotierenden Unterbau (7) vorgesehen ist, und eine Motorhaube (11) aufweist, wobei die Motorhaube (11) um den Bedienersitz-Stützsockel (12) angeordnet ist und den rotierenden Unterbau (7) bedeckt, wobei über einem Bedienersitz (13) ein Kabinendach (18) angeordnet ist, das von dem Bedienersitz-Stützsockel (12) gestützt ist, wobei das Kabinendach (18) an einem Paar einer linken und einer rechten Säule (41) gestützt ist, das im Wesentlichen parallel nach oben ausgedehnt ist;
der rotierende Unterbau (7) ein aufrechtes Teil (7a) aufweist, das an einem hinteren Ende des rotierenden Unterbaus (7) nach oben steht;
an einem oberen Ende des hinteren aufrechten Teils (7a) in derselben Höhe wie eine vor dem Bedienersitz (13) angeordnete Stufe (17) ein Befestigungsteil (7f) vorgesehen ist, das horizontal ausgedehnt ist,
**dadurch gekennzeichnet, dass**
die Motorhaube (11) eine Rückwand (32) aufweist, damit sie geöffnet werden kann, die hinter dem Bedienersitz-Stützsockel (12) und an dem Befestigungsteil (7f) des aufrechten Teils (7a) angeordnet ist;
in der Motorhaube (11) ein Paar einer linken und einer rechten Aussparung (11a) vorgesehen ist, die von einem Außenumfang des rotierenden Unterbaus (12) nach innen eingebuchtet sind und von dem Befestigungsteil (7f) nach oben ausgedehnt sind, sodass das linke und das rechte Ende der Rückwand (32) nach vorn gebogen sind; und
das Paar der linken und der rechten Säule (41) in dem Paar der linken und der rechten Aussparung (11a) in der Weise angeordnet ist, dass es die Rückwand (32) von links und rechts auf beiden Seiten einklemmt, und
die unteren Abschnitte des Paars der linken und der rechten Säule (41) an dem Befestigungsteil befestigt sind.

2. Rotierendes Arbeitsfahrzeug (1) nach Anspruch 1, bei dem an einem oberen Ende des Bedienersitz-Stützsockels (12) ein Verstärkungselement (47) vorgesehen ist und das Verstärkungselement (47) das Paar der linken und der rechten Säule (41) des Kabinendachs (18) verstärkt.

3. Rotierendes Arbeitsfahrzeug (1) nach Anspruch 1, bei dem das Verstärkungselement (47) seitlich ausgedehnt ist und an dem linken oder an dem rechten Ende des Verstärkungselements (47) eine Aussparung (47a) aufweist, die entlang eines Außendurchmessers des Paars der linken und der rechten Säule (41) gekrümmt ist, wobei die Aussparung (47a) mit dem vertikalen Mittelabschnitt des Paars der linken und der rechten Säule (41) in Eingriff ist und das andere des linken und des rechten Endes an einer oberen Oberfläche eines hinteren Abschnitts des Bedienersitz-Stützsockels (12) befestigt ist.

4. Rotierendes Arbeitsfahrzeug (1) nach einem der Ansprüche 1 bis 3, bei dem die Motorhaube (11) ein Paar einer linken und einer rechten Seitenabdeckung (31) aufweist; und
die Motorhaube (11) das Paar der linken und der rechten Seitenabdeckung (31) und eine Rückwand (32) umfasst und das Paar der linken und der rechten Aussparung (11a) parallel zu gegenüberliegenden Teilen zwischen dem Paar der linken und der rechten Seitenabdeckung (31) und der Rückwand (32) ausgedehnt ist und das Paar der linken und der rechten Säule (41) in der Nähe des entsprechenden einen der gegenüberliegende Teile in der Weise zwischen dem Paar der linken und der rechten Seitenabdeckung (31) und der Rückwand (32) liegt, dass es die gegenüberliegenden Teile abdeckt und die gegenüberliegenden Teile schützt.

## Revendications

1. Véhicule de travail rotatif (1), dans lequel un corps rotatif (3) possède une base rotative (7), une base de support de siège d'opérateur (12) prévue sur la base rotative (7) et un capot (11), le capot (11) est agencé autour de la base de support de siège d'opérateur (12) et recouvre la base rotative (7), et un abri (18) est agencé au-dessus d'un siège d'opérateur (13) supporté sur la base de support de siège d'opérateur (12), dans lequel
l'abri (18) est supporté sur une paire de colonnes gauche et droite (41) étendues vers le haut de manière essentiellement parallèle ;
la base rotative (7) possède une partie relevée (7a) s'élevant vers le haut à une extrémité arrière de la base rotative (7) ;
une partie de fixation (7f) étendue horizontalement est formée à une extrémité supérieure de la partie relevée arrière (7a) à la même hauteur qu'une marche (17) disposée avant le siège de l'opérateur (13), **caractérisé en ce que** :
le capot (11) possède un recouvrement arrière (32) de manière à pouvoir être ouvert, agencé derrière la base de support de siège d'opérateur (12) et sur la partie de fixation (7f) de la partie relevée (7a) ;
une paire de retraits gauche et droit (11a) dentée vers l'intérieur depuis un périmètre externe de la base rotative (12) et étendue vers le haut depuis la partie de fixation (7f) est formée dans le capot (11) de sorte que les extrémités gauche et droite du recouvrement arrière (32) sont courbées vers l'avant ; et
la paire de colonnes gauche et droite (41) est agencée dans la paire de retraits gauche et droit (11a) de manière à serrer le recouvrement arrière (32) depuis les deux côtés gauche et droit, et
des portions inférieures de la paire de colonnes gauche et droite (41) sont fixées à la partie de fixation.

2. Véhicule de travail rotatif (1) selon la revendication 1, dans lequel un élément de renforcement (47) est prévu à une extrémité supérieure de la base de support de siège d'opérateur (12) et l'élément de renforcement (47) renforce la paire de colonnes gauche et droite (41) de l'abri (18).

3. Véhicule de travail rotatif (1) selon la revendication 1, dans lequel l'élément de renforcement (47) est étendu latéralement et possède un retrait (47a) courbé le long d'un périmètre externe de la paire de colonnes gauche et droite (41) à une des extrémités gauche et droite de l'élément de renforcement (47), le retrait (47a) est engagé avec la portion centrale verticale de la paire de colonnes gauche et droite (41), et l'autre des extrémités gauche et droite est fixée à une surface supérieure d'une portion arrière de la base de support de siège d'opérateur (12).

4. Véhicule de travail rotatif (1) selon l'une des revendications 1 à 3, dans lequel le capot (11) possède une paire de recouvrements latéraux gauche et droit (31) ; et
le capot (11) comprend la paire de recouvrements latéraux gauche et droit (31) et un recouvrement arrière (32), et la paire de retraits gauche et droit (11a) est étendue parallèlement à des parties opposées entre la paire de recouvrements latéraux gauche et droit (31) et le recouvrement arrière (32), et la paire de colonnes gauche et droite (41) est proche de la partie 2 correspondante de la partie opposée entre la paire de recouvrements latéraux gauche et droit (31) et le recouvrement arrière (32) de manière à recouvrir les parties opposées et protéger les parties opposées.
